# EUROPEAN PATENT APPLICATION

(11) **EP 2 630 905 A1**
(43) Date of publication of application: **28.08.2013**
(21) Application number: 13152961.2
(22) Date of filing: 29.01.2013
(51) Int. Cl.: A47L 15/42, D06F 39/00

(54) **Water softening device and dishwasher having the same**

(30) Priority: 30.01.2012 KR 20120009077
(71) Applicant: Samsung Electronics Co., Ltd, Gyeonggi-do 443-742 (KR)
(72) Inventor: Lee, Sang Hoon, Gyeonggi-do (KR); Kim, Jeong Myeong, Seoul (KR); Son, Young Myung, Gyeongsangnam-do (KR); Cho, Han Wook, Gyeonggi-do (KR)
(74) Representative: Grünecker, Kinkeldey, Stockmair & Schwanhäusser

(57) **Abstract**

Disclosed herein are a water softening device having an improved bottom face structure 121 and improved valve structure 150, and a dishwasher 1 having the same. A water softening device 100 includes an ion exchange resin tank 110 to accommodate an ion exchange resin therein, a regeneration tank 120 connected with the ion exchange resin tank 110, the regeneration tank 120 allowing regeneration of the ion exchange resin to occur therein, and a connection portion 140 to connect the ion exchange resin tank 110 and the regeneration tank 120 to each other, wherein the connection portion 140 comprises a valve 150 to open and close the connection portion 140, and the valve 150 includes a first state in which a flow path 142 is connected to the ion exchange resin tank 110, and a second state in which the flow path 142 is connected to the regeneration tank 120, wherein the valve 150 is inserted into the flow path 142 in the second state.

## Description

### BACKGROUND

### 1. Field

Embodiments of the present invention relate to a water softening device which may enhance efficiency of the water softening device and a dishwasher having the same.

### 2. Description of the Related Art

In general, a dishwasher, which is a device to wash tableware including dishes by spraying high-pressure washing water to the tableware, usually performs operations of pre-washing, washing, rinsing and drying. Food scraps on the tableware are removed in the pre-washing operation by spraying high-pressure washing water on the tableware without adding detergent, and in the washing operation, washing water is sprayed and at the same time detergent is added by a detergent supplying device to clean the tableware.

The dishwasher generally includes a body provided therein with a tub, a basket to receive tableware installed in the tub to be movable forward and backward, and spray nozzles provided to upper and lower portions of the basket to spray washing water, and thereby allows the washing water sprayed from the spray nozzle to wash the tableware.

In the meantime, a water softening device having an ion exchange resin applied thereto is often employed by the dishwasher to soften hard water. Such a water softening device includes an ion exchange resin tank in which washing water is softened and a regeneration tank in which the ion exchange resin is regenerated.

In conventional cases, the substance in the regeneration tank may not be uniformly distributed but more densely distributed in certain positions, and in this case, the substance is allowed to be supplied even when there is a substance residue in the tank. Further, salt residue may act as a resistor against distribution of the washing water, thereby making it difficult to maintain a constant concentration of a solution at a desired value.

A valve is positioned between the ion exchange resin tank and the regeneration tank to allow the washing water to be supplied to the ion exchange resin tank in the event of softening the water and to the regeneration tank in the event of regenerating the ion exchange resin. This conventional valve divides the washing water to allow part of the washing water to flow into the regeneration tank. However, in this case, the percentage of washing water flowing into the regeneration tank may be varied by the flow rate and pressure of the washing water and continuous use of the valve may result in degradation of mechanical and electrical precision of the valve.

### SUMMARY

Therefore, it is an aspect of the present invention to provide a water softening device having an improved bottom face structure and improved valve structure, and a dishwasher having the same.

Additional aspects of the invention will be set forth in part in the description which follows and, in part, will be obvious from the description, or may be learned by practice of the invention.

In accordance with one aspect of the present invention, a water softening device includes an ion exchange resin tank to accommodate an ion exchange resin therein, a regeneration tank connected with the ion exchange resin tank, the regeneration tank allowing regeneration of the ion exchange resin to occur therein, and a connection portion to connect the ion exchange resin tank and the regeneration tank to each other, wherein the connection portion includes a valve to open and close the connection portion, and the valve includes a first state in which a flow path is connected to the ion exchange resin tank, and a second state in which the flow path is connected to the regeneration tank, wherein the valve is inserted into the flow path in the second state.

One end of the valve may be provided with a fixing member allowed to be inserted into the flow path and be fixed.

The valve may be a solenoid valve which is automatically operable using magnetic force.

The valve may include a magnetic member for operation of the valve, and the magnetic member and the fixing member may be coupled to each other by a support member.

The magnetic member may be coupled to one side of the ion exchange resin tank through an elastic member.

A bottom face of the regeneration tank may be provided with a plurality of slits for uniform distribution of a solute in the regeneration tank.

A width of a cross section of each of the slits may narrow toward an outer surface of the bottom face.

The regeneration tank may include a bottom face, and the bottom face may be provided with a first space and second space to allow water flowing into the regeneration tank to be uniformly distributed during regeneration.

A flow path extending from the connection portion may be provided to connect the first space and the second space to each other.

At least one portion of an inner side of the connection portion may be provided with a protrusion protruding from the inner side of the connection portion toward the flow path to prevent the fixing member from being inserted into the flow path beyond a certain length.

In accordance with another aspect of the present invention, a water softening device having an ion exchange resin tank to accommodate an ion exchange resin therein and the regeneration tank allowing regeneration of the ion exchange resin to occur therein includes a connection portion to connect the ion exchange resin tank and the regeneration tank, a valve to divert a flow path created in the connection portion, wherein a bottom face of the regeneration tank is provided with a plurality of slits for uniform distribution of a solute in the regeneration tank.

The bottom face of the regeneration tank may be provided with a flow path for distribution of a fluid flowing into the regeneration tank.

The connection portion may include a connection flow path to connect the ion exchange resin tank and the regeneration tank, and a connection portion groove to accommodate the valve therein.

The valve may be arranged in parallel to the direction in which the connection flow path of the connection portion to connect the ion exchange resin tank and the regeneration tank is arranged.

The valve may be provided with a first state in which the valve contacts an inflow path which communicates with the connection flow path and the regeneration tank, and a second state in which at least one portion of the valve contact the connection portion groove.

The valve may be a solenoid valve which is automatically controllable, and one side of the valve which contacts a portion of the connection portion may be provided with a flexible fixing member.

The slits may be provided at an outside of the flow path.

In accordance with a further aspect of the present invention, a dishwasher includes a housing to form an outer appearance of the dishwasher, a tub formed in the housing to allow tableware to be washed therein, a water supply unit to supply washing water to the tub, and a water softening device provided between the water supply unit and the tub to soften the washing water, wherein the water softening device includes an ion exchange resin tank to accommodate an ion exchange resin therein; and a regeneration tank connected with the ion exchange resin tank, the regeneration tank allowing regeneration of the ion exchange resin to occur therein, wherein a connection portion is provided between the ion exchange resin tank and the regeneration tank, a flow path is diverted by a valve positioned inside the connection portion.

An end of the valve may be provided with a fixing member to block a connection flow path connecting the ion exchange resin tank and the regeneration tank, wherein the valve may be provided with a first state in which the fixing member is positioned in the flow path, and a second state in which at least one portion of the fixing member is inserted into a connection portion groove positioned at a rear of the connection flow path.

A bottom face of the regeneration tank may be provided with at least one slit for uniform distribution of a solute in the regeneration tank, wherein a width of a cross section of the slit may be widened from a surface of the bottom face toward an exterior of the water softening device.

The regeneration tank may include a first space, a second space and a flow path, in order to allow water flowing into the regeneration tank to be uniformly distributed during regeneration of the ion exchange resin.

The flow path in the regeneration tank may include a main flow path to communicate with a connection flow path connecting the ion exchange resin tank and the regeneration tank, a first flow path connected between the main flow path and the first space, and a second flow path connected between the main flow path and the second space.

The dishwasher may further include a sensor coupled to an outside of the water softening device to measure the amount of a solute in the regeneration tank.

### BRIEF DESCRIPTION OF THE DRAWINGS

These and/or other aspects of the invention will become apparent and more readily appreciated from the following description of the embodiments, taken in conjunction with the accompanying drawings of which:
FIG. 1 is a perspective view schematically illustrating the configuration of a dishwasher according to an exemplary embodiment of the present invention;
FIG. 2 is a partially cut away view illustrating a water softening device according to the exemplary embodiment of the present invention;
FIG. 3 is a view illustrating the bottom face of a regeneration tank according to the exemplary embodiment of the present invention;
FIG. 4 is an enlarged view illustrating section A of FIG. 2;
FIG. 5 is a cross-sectional view schematically illustrating the water softening device according to the exemplary embodiment of the present invention;
FIG. 6 is a view illustrating a first state of a valve according to the exemplary embodiment of the present invention;
FIG. 7 is a view illustrating a second state of the valve according to the exemplary embodiment of the present invention; and
FIG. 8 is a view illustrating a second state of a valve according to another exemplary embodiment of the present invention.

### DETAILED DESCRIPTION

Reference will now be made in detail to the embodiments of the present invention, examples of which are illustrated in the accompanying drawings, wherein like reference numerals refer to like elements throughout.

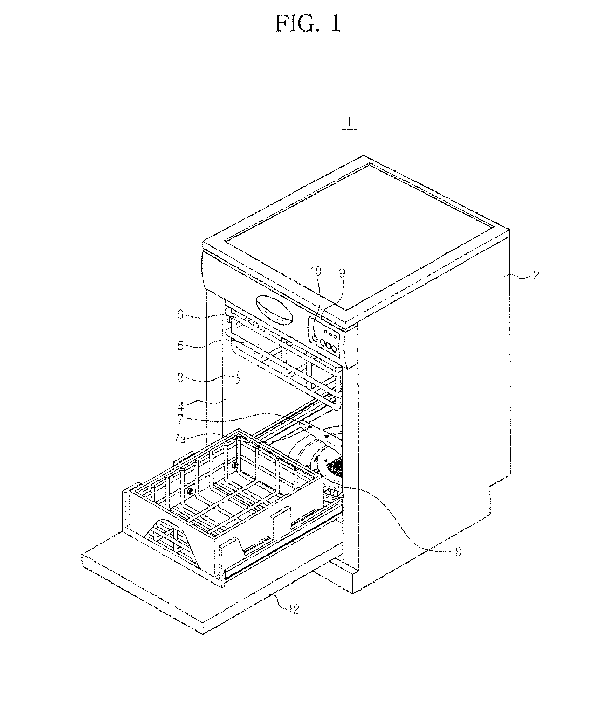

FIG. 1 is a perspective view schematically illustrating the configuration of a dishwasher according to an exemplary embodiment of the present invention.

As shown in FIG. 1, a dishwasher 1 is provided with a body 2 forming an outer appearance of the dishwasher 1 and provided therein with a tub 3 in which tableware is washed. Formed on the front of the body 2 is an opening 4 which is open at the front so that tableware may be put in and drawn out of the tub 3. Installed at the front of the body 2 is a door 12 which has a lower end hinged to the front lower portion of the body 2 to rotate to open and close the opening 4.

Mounted on the front of the body 2 are a display to display the operational state of the dishwasher 1 and a control unit 10 to control the operation of the dishwasher 1.

A pair of baskets 5 provided with a receiving portion having an open top to receive tableware is installed in the tub 3 at upper and lower portions of the tub 3 such that the baskets 5 are movable forward and backward to be accommodated in and drawn out of the tub 3 through the open front of the body 2.

In addition, a plurality of spray nozzles 7 is rotatably installed at the upper and lower sides of the pair of baskets 5 to rotate and spray water through spray holes 7a to wash tableware contained in the baskets 5. The baskets 5 are formed by a wire 6 disposed in a lattice shape to allow water spraying from the spray nozzles 7 to reach and wash the tableware contained in the baskets 5.

A sump 8 to collect the washing water is formed at the lower portion of the tub 3, and provided at the lower portion of the tub 3 are a water supply unit having a water supply path 11 and a water supply valve (not shown), and a drainage device having a drainage path (not shown) and a drain pump (not shown). A water softening device 100 is installed at one side of the water supply path 11 to communicate with the water supply path 11.

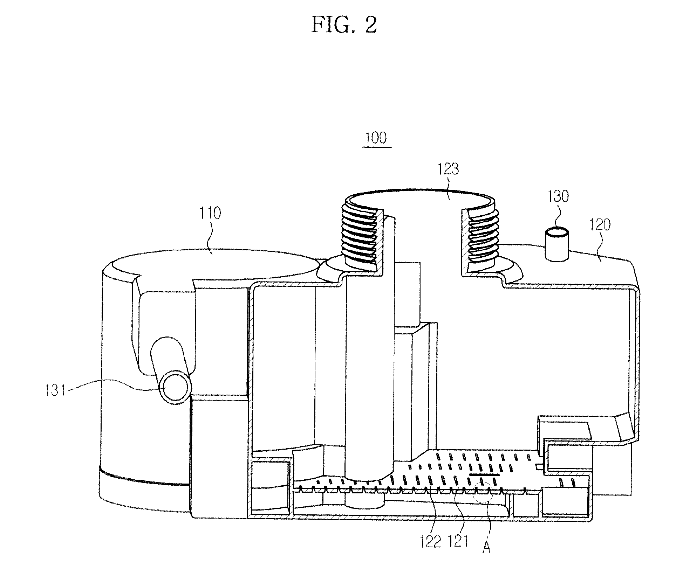

FIG. 2 is a partially cut away view illustrating a water softening device according to the exemplary embodiment of the present invention.

As shown in FIG. 2, the water softening device 100 includes an ion exchange resin tank 110 and a regeneration tank 120. Accommodated in the ion exchange resin tank 110 is an ion exchange resin to adsorb and remove heavy metals and metal ions contained in washing water. The ion exchange resin converts the washing water into soft water with high capability of washing. A representative ion exchange resin is R-SO3Na, and hard water may be softened using the ion exchange resin, according to the following reaction.

2(R-SO₃Na) + Ca²⁺ → (R-SO₃)₂Ca + 2Na⁺

A substance to regenerate the ion exchange resin and improve the capabilities of the ion exchange resin to soften water is accommodated in the regeneration tank 120. Salt (NaCl) may be used as the substance to be accommodated in the regeneration tank 120. As the ion exchange resin adsorbs metal ions contained in the washing water, the volume thereof increases, and thereby the capability of the ion exchange resin to adsorb metal ions tends to be degraded. The process of removing metal ions from the ion exchange resin is referred to as regeneration of the ion exchange resin. The regeneration of the ion exchange resin occurs according to the reaction shown below, thereby restoring the ions of the ion exchange resin which are exhausted as the softening reaction continues.

(R-SO3)2Ca + 2NaCl → 2(R-SO3Na) + CaCl2

A fluid inlet 130 into which washing water flows may be positioned at one side of the regeneration tank 120. A fluid outlet 131 may be positioned at one side of the ion exchange resin tank 110 to allow the washing water that has undergone the softening process to be discharged therethrough. In the softening process, the washing water flowing into the fluid inlet 130 moves toward the ion exchange resin tank 110, flows out through the fluid outlet 131, and moves along the water supply path to be sprayed on the tub. In the regeneration process, the washing water flowing into the fluid inlet 130 undergoes regeneration of the ion exchange resin in the regeneration tank 120, and then moves to the ion exchange resin tank 110 through a connection flow path 142. Thereafter, the washing water undergoes ion exchange in the ion exchange resin tank 110, and then moves through the fluid outlet 131 to be sprayed to the tub 3 in the same way as in the softening process.

A bottom face 121 is positioned at the lower portion of the regeneration tank 120. Slits 122 may be positioned at the bottom face 121 for uniform distribution of a solute in the refrigeration tank 120, for example, salt. Also, flow paths 125, 126 and 127 may be provided to distribute a solution in the refrigeration tank 120, which will be described later. A solute inlet 128 through which a substance for regeneration, e.g., salt is supplied may be provided at the upper side of the refrigeration tank 120.

The ion exchange resin tank 110 and the regeneration tank 120 are connected to each other by a connection portion 140. The connection portion 140 is provided with the connection flow path 142 for inflow of washing water. A valve 150 may be positioned at the connection portion 140 to open and close the connection flow path 142, which will be described later.

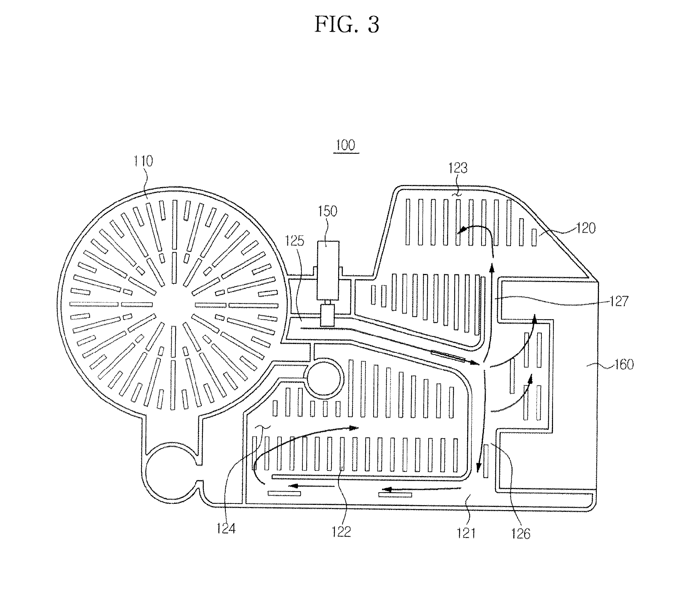

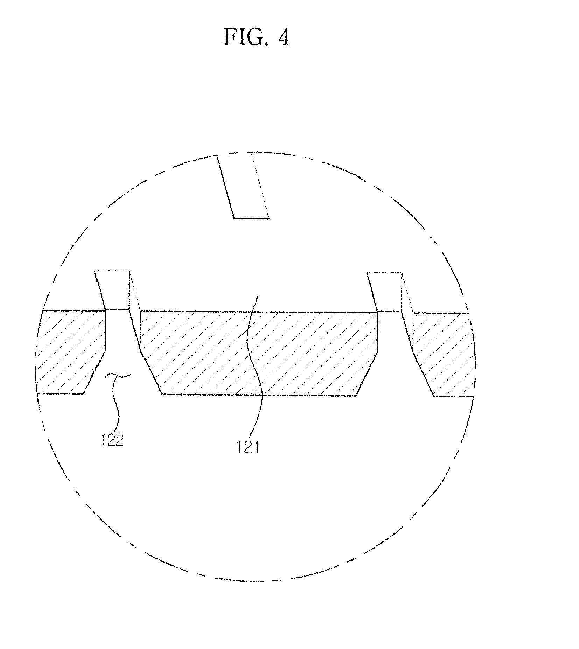

FIG. 3 is a view illustrating the bottom face of a regeneration tank according to the exemplary embodiment of the present invention, and FIG. 4 is an enlarged view illustrating section A of FIG. 2.

As shown in FIGS. 3 and 4, a plurality of slits 122 may be provided at the bottom face 121 of the regeneration tank 120. Also, flow paths 125, 126 and 127 may be provided for smooth flow of washing water separately from the slits 122.

The bottom face 121 includes a first space 123 and a second space 124. Dividing the bottom face 121 into the first space 123 and the second space 124 is intended to ensure uniform distribution of the washing water flowing into the regeneration tank 120. When the washing water flows uniformly into the regeneration tank 120, it may be possible to produce regenerated water of a constant concentration.

The connection flow path 142 connecting the ion exchange tank 110 and the regeneration tank 120 to each other is connected to the main flow path 125 which is between the first space 123 and the second space 124. The flow path connecting the main flow path 125 to the first space 123 is defined as a first flow path 127, and the flow path connecting the main flow path 125 to the second space 124 is defined as a second flow path 126. In the structures of the flow path 125, 126 and 127 as above, the washing water may be allowed to evenly flow into the regeneration tank 120 through the main flow path 125, first flow path 127 and second flow path 126.

A sensor 160 to analyze the amount of solute in the regeneration tank 120 may be arranged in the empty space between the first space 123 and the second space 124. The sensor 160 may be connected to the outside of the water softening device 100, and in that case, a photo sensor may be used as the sensor 160.

In the meantime, slits 122, long slender gaps, may be formed in the bottom face 121 of the regeneration tank 120. FIGS. 3 and 4 illustrate that most of the slits 122 are positioned at the outside of the flow paths 125, 126 and 127, but embodiments of the present invention are not limited thereto. It may be possible to provide the slits 122 throughout the entire bottom face 121 of the regeneration tank 120.

The slits 122 allow the solute in the regeneration tank 120, e.g., salt to be uniformly distributed. The slits 122 may be formed to have a cross-section, the width of which narrows towards the surface of the bottom face 121. That is, the width of the cross section of the slit 122 may have a tendency to increase from the bottom face 121 downward. In this structure of the slits 122, the upper portion of the cross-sectional area is narrow while the lower portion of the cross-sectional area is wide, and therefore infiltration of the solute into the bottom face 121 may be prevented, and smooth inflow of washing water may be enabled.

Because of the structures of the flow paths 125, 126 and 127 and the slits 122 as described above, the solute may be uniformly distributed in the regeneration tank 120, and the washing water may easily flow around the inside of the regeneration tank 120 as a solvent, and thereby the possibility of having solute residue remaining in the regeneration tank 120 may decrease. As the possibility of having solute residue remaining in the regeneration tank 120 decreases during regeneration, it may be possible to produce a solution with a predetermined concentration. Further, it may be possible to use as large an amount of solute as possible.

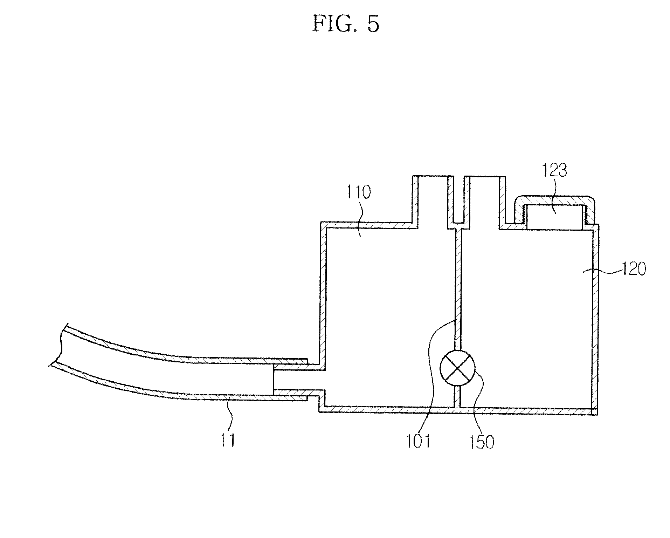

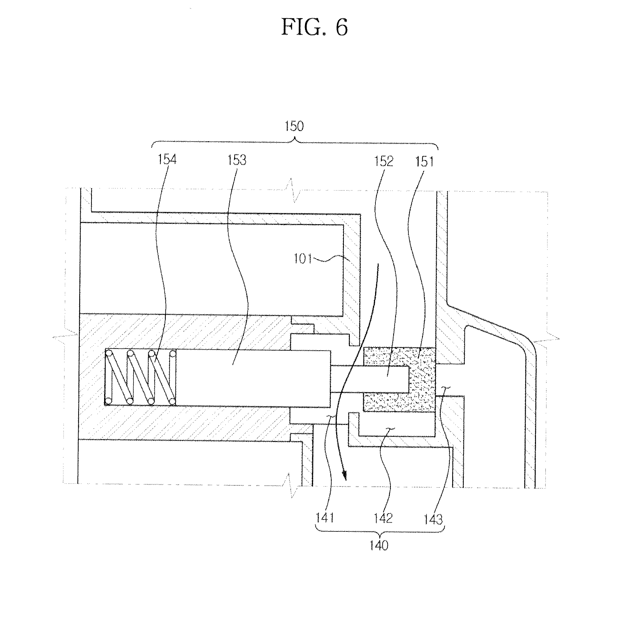

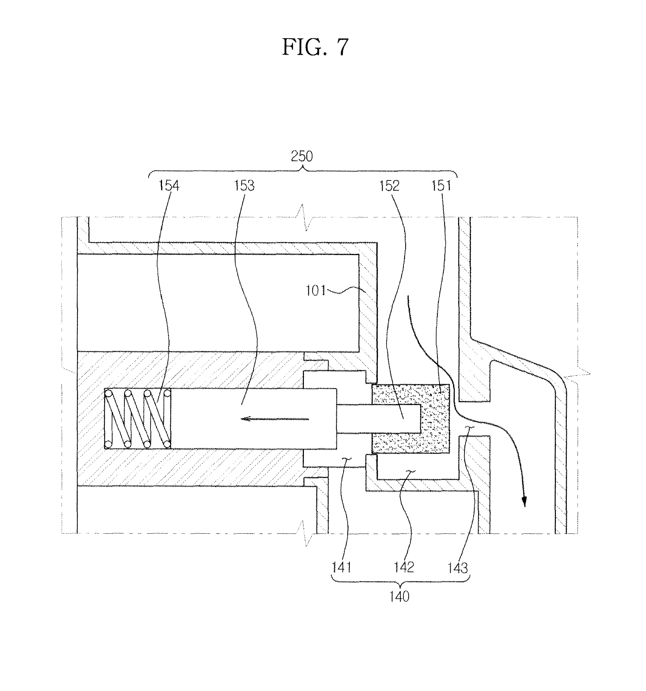

FIG. 5 is a cross-sectional view schematically illustrating the water softening device according to the exemplary embodiment of the present invention, FIG. 6 is a view illustrating a first state of a valve according to the exemplary embodiment of the present invention, and FIG. 7 is a view illustrating a second state of the valve according to the exemplary embodiment of the present invention.

As shown in FIGS. 5 to 7, a valve 150 is positioned between the ion exchange resin tank 110 and the regeneration tank 120. Flow of the washing water from the ion exchange resin tank 110 to the regeneration tank 120 is determined by opening and closing of the valve 150.

The valve 150 may be positioned at a portion of a partition wall 101 positioned between the ion exchange resin tank 110 and the regeneration tank 120. That is, the valve 150 may be positioned in the connection flow path 142 of the connection portion 140 which connects the ion exchange resin tank 110 and the regeneration tank 120 to each other and in a connection portion groove 141. The valve 150 may be arranged in parallel with the connection portion groove 141 and the connection flow path 142 which are arranged in the direction pointing from the ion exchange resin tank 110 to the regeneration tank 120.

A fixing member 151 which may be inserted into the connection flow path 142 may be provided at the end of the valve 150. The fixing member 151 may be formed of an flexible silicone material, and thereby be easily inserted into the connection portion groove 141. The valve 150 may be a solenoid valve which is automatically operable using electromagnetic force. The solenoid valve is automatically controllable through control of a control unit (not shown). The valve 150 may include a magnetic member 153 for operation of the valve 150. The magnetic member 153 and the fixing member 151 are coupled to each other by a support member 152 positioned between the magnetic member 153 and the fixing member 151. An elastic member 154 may be coupled to the rear of the magnetic member 153 of the valve 150, and the magnetic member 153, support member 152 and fixing member 151 may be integrally movable according to operation of the elastic member 154. However, embodiments of the present invention are not limited thereto. It may also be possible that the valve 150 is operated by movement of fluid, without the elastic member 154.

The valve 150 includes a first state in which the connection flow path 142 is connected to the ion exchange resin tank 110 and a second state in which the connection flow path 142 is connected to the regeneration tank 120.

The connection portion 140 which connects the ion exchange resin tank 110 with the regeneration tank 120 may include a connection flow path 142 through which the washing water flows, and a connection portion groove 141 adapted to allow the valve 150 to be movable. Also, the connection flow path 142 may communicate with an inflow path 143 which is an entrance to the regeneration tank 120.

When the valve 150 is in the first state, the fixing member 151 of the valve 150 protrudes into the connection flow path 142 and blocks the inflow path 143 which communicates with the connection flow path 142 and leads to the regeneration tank 143. Thereby, the washing water does not flow into the regeneration tank 120, but moves into the ion exchange resin tank 110.

When the valve 150 is in the first state, the elastic member 154 is compressed under control of the control unit (not shown), and thereby the magnetic member 153, support member 152 and fixing member 151 move backward. That is, the valve 150 moves from the connection flow path 142 toward the connection portion groove 141. Since the fixing member 151 is positioned at one end of the valve 150, at least one portion of the fixing member 151 is inserted into the connection portion groove 141. Thereby, washing water flows into the inflow path 143 which was blocked. At the same time, flow of the washing water into the ion exchange resin tank 110 is blocked since the fixing member 151, a part of the valve 150, is inserted into the connection portion groove 141.

With the structure of the valve 150 according to the illustrated embodiment, flow of the washing water into the ion exchange resin tank 110 may be more securely blocked during regeneration. That is, complete diversion of a flow path may be possible, and thus unnecessary consumption of the solute in the regeneration tank 120 may be prevented since accurate adjustment of the amount of the solute in the regeneration tank 120 is enabled. In addition, according to the illustrated embodiment of the present invention, the fixing member 151 of the valve 150 which contacts the partition wall 101 is formed of a silicone material, and therefore the possibility of poor operation caused by wear of the fixing member 151 may be reduced.

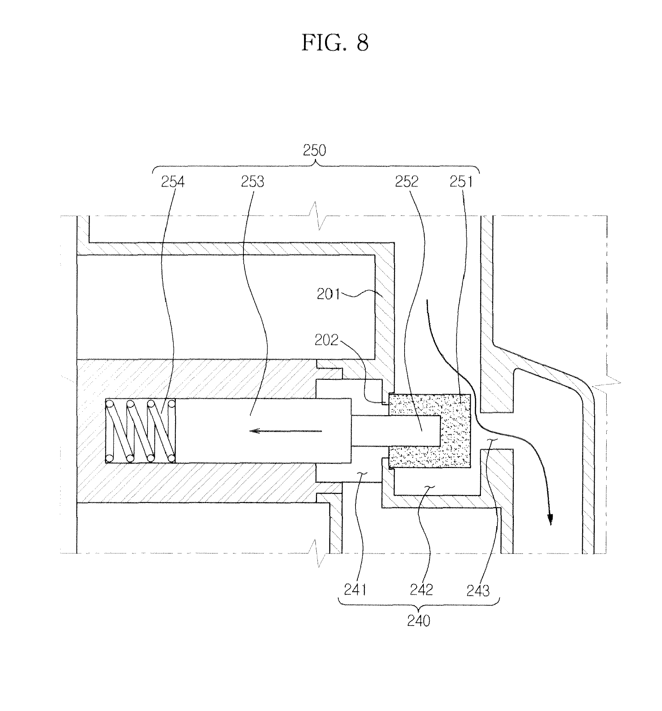

FIG. 8 is a view illustrating a second state of a valve according to another exemplary embodiment of the present invention.

As shown in FIG. 8, a fixing member 251 of a valve 250 is inserted into a connection portion groove 241. According to the illustrated embodiment shown in FIG. 8, a protrusion 202 may be provided to protrude from at least one portion of a partition wall 204 which forms the connection portion groove 241. Thereby, excessive insertion of the fixing member 251 into the connection portion groove 241 may be prevented as the fixing member 251 being inserted into the connection portion groove 241 is stopped by the protrusion 202.

As is apparent from the above description, in accordance with embodiments of the present invention, a solution with a constant concentration may be provided in a regeneration tank during the regeneration, and the substance in the regeneration tank may be used most efficiently.

Although a few embodiments of the present invention have been shown and described, it would be appreciated by those skilled in the art that changes may be made in these embodiments without departing from the principles and spirit of the invention, the scope of which is defined in the claims and their equivalents.

## Claims

1. A water softening device comprising:
an ion exchange resin tank to accommodate an ion exchange resin therein;
a regeneration tank connected with the ion exchange resin tank, the regeneration tank allowing regeneration of the ion exchange resin to occur therein; and
a connection portion to connect the ion exchange resin tank and the regeneration tank to each other,
wherein the connection portion comprises a valve to open and close the connection portion, and the valve includes a first state in which a flow path is connected to the ion exchange resin tank, and a second state in which the flow path is connected to the regeneration tank,
wherein the valve is inserted into the flow path in the second state.

2. The water softening device according to claim 1, wherein one end of the valve is provided with a fixing member allowed to be inserted into the flow path and be fixed.

3. The water softening device according to claim 2, wherein the valve is a solenoid valve which is automatically operable using magnetic force.

4. The water softening device according to claim 3, wherein the valve includes a magnetic member for operation of the valve, and the magnetic member and the fixing member are coupled to each other by a support member.

5. The water softening device according to claim 4, wherein the magnetic member is coupled to one side of the ion exchange resin tank through an elastic member.

6. The water softening device according to claim 1, wherein a bottom face of the regeneration tank is provided with a plurality of slits for uniform distribution of a solute in the regeneration tank.

7. The water softening device according to claim 6, wherein a width of a cross section of each of the slits narrows toward an outer surface of the bottom face.

8. The water softening device according to claim 1, wherein the regeneration tank includes a bottom face, and the bottom face is provided with a first space and second space to allow water flowing into the regeneration tank to be uniformly distributed during regeneration.

9. The water softening device according to claim 8, wherein a flow path extending from the connection portion is provided to connect the first space and the second space to each other.

10. The water softening device according to claim 2, wherein at least one portion of an inner side of the connection portion is provided with a protrusion protruding from the inner side of the connection portion toward the flow path to prevent the fixing member from being inserted into the flow path beyond a certain length.

11. A dishwasher comprising:
a housing to form an outer appearance of the dishwasher;
a tub formed in the housing to allow tableware to be washed therein;
a water supply unit to supply washing water to the tub; and
a water softening device provided between the water supply unit and the tub to soften the washing water,
wherein the water softening device comprises:
an ion exchange resin tank to accommodate an ion exchange resin therein; and a regeneration tank connected with the ion exchange resin tank, the regeneration tank allowing regeneration of the ion exchange resin to occur therein,
wherein a connection portion is provided between the ion exchange resin tank and the regeneration tank, and a flow path is diverted by a valve positioned inside the connection portion.

12. The dishwasher according to claim 11, wherein an end of the valve is provided with a fixing member to block a connection flow path connecting the ion exchange resin tank and the regeneration tank,
wherein the valve is provided with a first state in which the fixing member is positioned in the connection flow path, and a second state in which at least one portion of the fixing member is inserted into a connection portion groove positioned at a rear of the connection flow path.

13. The dishwasher according to claim 11, wherein a bottom face of the regeneration tank is provided with at least one slit for uniform distribution of a solute in the regeneration tank,
wherein a width of a cross section of the slit is widened from a surface of the bottom face toward an exterior of the water softening device.

14. The dishwasher according to claim 11, wherein the regeneration tank includes a first space, a second space and a flow path, in order to allow water flowing into the regeneration tank to be uniformly distributed during regeneration of the ion exchange resin,
wherein the flow path in the regeneration tank includes a main flow path to communicate with a connection flow path connecting the ion exchange resin tank and the regeneration tank, a first flow path connected between the main flow path and the first space, and a second flow path connected between the main flow path and the second space.

15. The dishwasher according to claim 11, further comprising a sensor coupled to an outside of the water softening device to measure the amount of a solute in the regeneration tank.
